(19) Europäisches Patentamt
European Patent Office
Office européen des brevets

(11) **EP 1 759 483 B1**

(12) **FASCICULE DE BREVET EUROPEEN**

(45) Date de publication et mention
de la délivrance du brevet:
**20.01.2016 Bulletin 2016/03**

(21) Numéro de dépôt: **05778838.2**

(22) Date de dépôt: **22.06.2005**

(51) Int Cl.:
*H04L 9/32* [(2006.01)]     *H04L 9/30* [(2006.01)]
*G06F 21/32* [(2013.01)]

(86) Numéro de dépôt international:
**PCT/FR2005/001577**

(87) Numéro de publication internationale:
**WO 2006/008395 (26.01.2006 Gazette 2006/04)**

(54) **PROCEDE DE CODAGE DE DONNEES BIOMETRIQUES. PROCEDE DE CONTROLE D'IDENTITE ET DISPOSITIFS POUR LA MISE EN OEUVRE DES PROCEDES**

VERFAHREN ZUR KODIERUNG BIOMETRISCHER DATEN, VERFAHREN ZUR IDENTITÄTSKONTROLLE SOWIE VORRICHTUNG ZUR AUSFÜHRUNG DIESER VERFAHREN

METHOD FOR CODING BIOMETRIC DATA, METHOD FOR CONTROLLING IDENTITY AND DEVICES FOR CARRYING OUT SAID METHODS

(84) Etats contractants désignés:
**AT BE BG CH CY CZ DE DK EE ES FI FR GB GR HU IE IS IT LI LT LU MC NL PL PT RO SE SI SK TR**

(30) Priorité: **22.06.2004 FR 0406794**

(43) Date de publication de la demande:
**07.03.2007 Bulletin 2007/10**

(73) Titulaire: **MORPHO**
**92130 Issy-Les-Moulineaux (FR)**

(72) Inventeur: **CHABANNE Hervé**
**F-78200 Mantes la jolie (FR)**

(74) Mandataire: **Cabinet Plasseraud**
**52, rue de la Victoire**
**75440 Paris Cedex 09 (FR)**

(56) Documents cités:
**WO-A1-00/51244     WO-A1-02/078249**

• **DAVIDA G I ET AL: "On enabling secure applications through off-line biometric identification" SECURITY AND PRIVACY, 1998. PROCEEDINGS. 1998 IEEE SYMPOSIUM ON OAKLAND, CA, USA 3-6 MAY 1998, LOS ALAMITOS, CA, USA,IEEE COMPUT. SOC, US, 3 mai 1998 (1998-05-03), pages 148-157, XP010280360 ISBN: 0-8186-8386-4**

## Description

La présente invention concerne le codage de données biométriques.

L'utilisation de la biométrie se développe du fait notamment de son association naturelle et permanente à un individu. En particulier, on peut utiliser la biométrie à des fins de contrôle d'identité.

Ainsi, il est courant de mémoriser, dans une base de données, des données biométriques relatives à des individus respectifs, par exemple des empreintes digitales, des caractéristiques de l'iris des yeux, de la voix, etc. Cette phase est généralement appelée enrôlement.

Par la suite, on peut contrôler l'identité d'un individu ayant préalablement fait l'objet d'un enrôlement, ou du moins la présence de sa biométrie dans la base de données, en effectuant une mesure biométrique de cet individu et en la comparant aux données biométriques mémorisées dans la base de données. Lorsque la mesure biométrique correspond à certaines des données biométriques mémorisées, cela signifie qu'il y a identité entre l'individu en question et celui dont lesdites données biométriques correspondantes ont été mémorisées lors d'un enrôlement préalable.

Toutefois, un problème se pose du fait de la variabilité des mesures biométriques. En effet, lorsque la biométrie considérée est une empreinte digitale par exemple, l'angle de présentation du doigt et la pression exercée par le doigt sur le capteur d'empreintes sont des exemples de paramètres susceptibles d'influer de façon significative sur le résultat de la mesure. Une comparaison stricte de deux mesures biométriques distinctes relatives à un même individu pourrait donc aboutir à une conclusion erronée d'absence d'identité.

WO 00/51244 divulgue un procédé apte à limiter cet inconvénient. A cet effet, il propose de coder les données biométriques mémorisées à l'aide d'un code correcteur d'erreurs.

On rappelle qu'il existe une multitude de codes correcteurs d'erreurs dont la caractéristique commune est de générer un mot à partir d'une information initiale en y introduisant de la redondance. Par exemple, pour une information initiale i, le mot généré peut être écrit $c=f(i)$, où f est une fonction publique relative à un code correcteur d'erreurs donné. Une personne connaissant le code correcteur d'erreurs utilisé peut alors retrouver l'information i à partir du mot c et de la fonction inverse de f, soit $i=f^{-1}(c)$.

Dans WO 00/51244, chacune des données biométriques est codée avec un mot respectif d'un code correcteur d'erreurs, de façon à être considérée comme une expression "corrompue" dudit mot. Autrement dit, une biométrie b est assimilée à un mot c pris au hasard dans un code choisi, dans lequel un certain nombre de modifications sont apparues. Lorsque ces différentes quantités sont représentées par des chaînes binaires, cela équivaut à considérer que $b=c \oplus \delta$, où $\oplus$ désigne l'opérateur OU exclusif et où $\delta$ est une chaîne binaire dont les bits à "1" indiquent des différences entre des bits correspondants de b et c (soit $\delta=b \oplus c$).

Pour chaque biométrie b, on mémorise une valeur, fonction de c, et la valeur de $\delta$ correspondante. La valeur fonction de c utilise une fonction h connue de hachage (par exemple SHA-1, MD5, RIPE-MD, HAVAL et SNERFU) dont le résultat $h(c)$ est un condensé de c à partir duquel il n'est pas possible de retrouver de façon certaine la valeur de c. Cela évite qu'un tiers ayant accès à la base de données puisse retrouver la biométrie des individus ayant fait l'objet d'un enrôlement préalable.

Par la suite, lorsqu'un individu se présente pour un contrôle d'identité, on mesure sa biométrie b'. Lorsque la biométrie b' est associée au même individu qu'une biométrie b pour laquelle des paramètres $h(c)$ et $\delta$ ont été préalablement mémorisés, b' peut s'exprimer comme une chaîne binaire qui s'apparente à b, à des effacements et des erreurs de bits près, liés à la différence existant entre deux mesures biométriques d'un même individu comme mentionné plus haut. Sous forme mathématique, cela peut s'écrire : b'=b ⊕ erreurs ⊕ effacements.

En effectuant un OU exclusif de b' et de $\delta$, pour chacun des $\delta$ préalablement mémorisés, on obtient alors une expression d'un mot c' du code correcteur d'erreurs choisi, relatif à b'. D'après ce qui précède, c' est égal au mot c auxdits effacements et erreurs binaires près, ce qui peut s'écrire : b'⊕δ=c'=c⊕ erreurs ⊕ effacements. Comme le code correcteur d'erreurs dont le mot c fait partie a été choisi précisément pour qu'une certaine quantité d'erreurs soient corrigées, on est alors capable de retrouver l'équivalence entre les mots c et c'.

Un hachage de c', h(c'), peut ainsi être comparé au h(c) préalablement mémorisé pour vérifier l'identité entre ces mots. On s'assure ainsi que la biométrie b' est bien celle de l'individu dont la biométrie b a été associée au couple (h(c),δ) lors d'un enrôlement préalable.

Toutefois, le procédé divulgué par WO 00/51244 présente plusieurs inconvénients. Tout d'abord, ce procédé pose un problème en termes de sécurité. En effet, si un tiers connaissant le code correcteur d'erreurs utilisé a accès à la base de données des couples (h(c),δ), il est alors capable de déterminer si un individu a fait l'objet d'un enrôlement préalable, à partir de sa biométrie b. Pour ce faire, il procède comme indiqué ci-dessus : il effectue par exemple un OU exclusif de la biométrie b avec différents δ mémorisés dans la base de données et il réalise un hachage du résultat de la première opération, grâce à la fonction de hachage h, pour le comparer au h(c) stocké en correspondance avec chacun des δ considérés. Une telle situation n'est pas souhaitable pour des raisons évidentes.

Par ailleurs, la nécessité de réaliser un hachage des mots de code selon l'enseignement de WO 00/51244 empêche de tirer profit du codage pour y incorporer de l'information utile, puisqu'une telle information serait de toute façon perdue dans le résultat condensé issu du hachage.

Un but de la présente invention est de pallier ces inconvénients.

Un autre but de la présente invention est de réaliser un codage de données biométriques tel qu'il empêche les personnes non autorisées à effectuer un contrôle d'identité à partir des données biométriques ainsi codées.

Un autre but de l'invention est de permettre un codage de données biométriques apte à incorporer de l'information utile.

Un autre but de l'invention est de permettre un contrôle d'identité à partir de données biométriques codées et d'informations pertinentes relatives à des individus respectifs, ledit contrôle d'identité ne pouvant être réalisé que par des personnes autorisées.

L'invention propose ainsi un procédé de codage de données biométriques associées à des individus respectifs, conforme à la revendication 1.

La combinaison en question est par exemple une opération de OU exclusif entre les données biométriques obtenues et le mot généré.

Grâce à ce codage, seules les personnes connaissant ladite fonction privée sont capables, sans effort excessif, de retrouver l'information dissimulée dans le mot avec lequel les données biométriques ont été codées.

De façon avantageuse, l'information dissimulée dans un mot relatif au code correcteur d'erreurs, avec lequel les données biométriques associées à un individu sont codées, est une identité dudit individu.

De façon avantageuse, le codage des données biométriques avec un mot respectif relatif à un code correcteur d'erreurs, chaque mot dissimulant, à l'aide d'une fonction privée, une information relative à l'individu associé aux données biométriques correspondantes, est conforme au cryptosystème de McEliece.

On peut par ailleurs modifier ou effacer une quantité sensiblement prédéterminée d'éléments binaires pour chaque mot avec lequel des données biométriques respectives sont codées. Cela permet en particulier d'atteindre un niveau de difficulté visé pour retrouver l'information dissimulée dans ledit mot, sans connaître ladite fonction privée. Un tel mode de réalisation est particulièrement avantageux pour amener la quantité d'erreurs dans chaque mot à la quantité maximale d'erreurs que le code correcteur d'erreurs choisi peut corriger, lorsque la quantité d'erreurs statistique entre deux mesures biométriques relatives à un même individu est inférieure ou égale à une telle quantité maximale.

L'invention propose en outre un procédé de contrôle d'identité à partir de données biométriques préalablement mémorisées, conforme à la revendication 9.

Le fait de retrouver une information à l'issue de l'étape de décodage est une indication que ledit individu faisant l'objet d'une mesure biométrique a préalablement vu ses données biométriques codées et mémorisées.

Lorsque l'information dissimulée est l'identité d'un individu, on vérifie en outre avantageusement, dans une étape ultérieure, que l'identité retrouvée après décodage du résultat du OU exclusif entre la mesure biométrique relative audit individu et certaines au moins des données biométriques codées mémorisées correspond à une identité déclinée par ledit individu. Cette vérification permet de s'assurer que l'individu a bel et bien fait l'objet d'un enrôlement préalable.

L'invention propose en outre un dispositif de codage comprenant des moyens pour mettre en oeuvre le procédé de codage susmentionné.

L'invention propose en outre un dispositif de contrôle comprenant des moyens pour mettre en oeuvre le procédé de contrôle d'identité susmentionné.

Ces dispositifs peuvent éventuellement être regroupés au sein d'un même système.

D'autres particularités et avantages de la présente invention apparaîtront dans la description ci-après d'exemples de réalisation non limitatifs, en référence aux dessins annexés, dans lesquels :

- la figure 1 est un diagramme donnant un exemple de répartition des distances de Hamming relatives à deux mesures biométriques pour un même individu ;
- la figure 2 est un diagramme donnant un exemple de répartition des distances de Hamming relatives à deux mesures biométriques pour des individus différents ;
- la figure 3 est un organigramme montrant des étapes d'une procédure d'enrôlement selon un mode de réalisation de l'invention ;
- la figure 4 est un organigramme montrant des étapes d'un contrôle d'identité selon un mode de réalisation de l'invention.

Comme cela a été expliqué en introduction, la mesure de données biométriques relatives à un individu varie d'une fois sur l'autre. Cette variation est également dépendante du type de données biométriques considérées (iris des yeux, empreintes digitales, caractéristiques vocales, etc.).

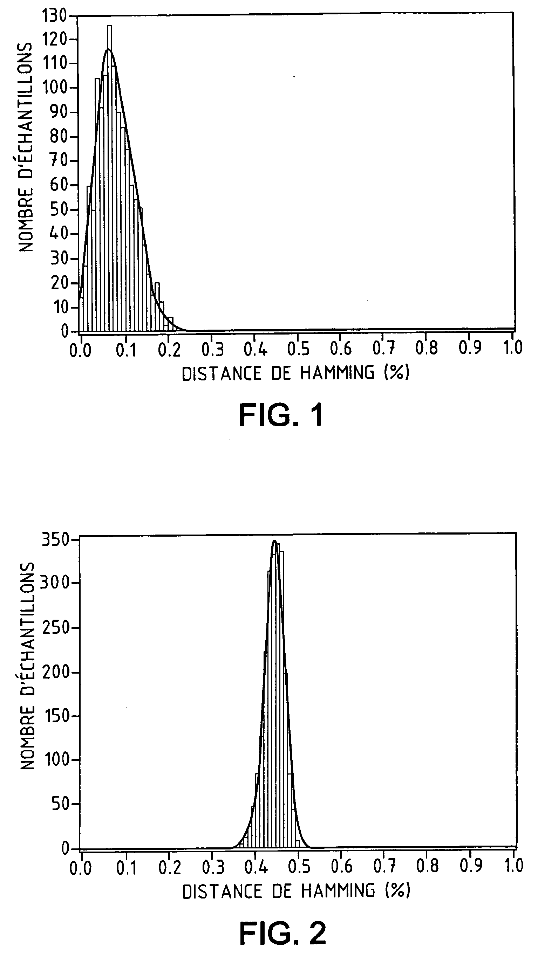

La figure 1 illustre un exemple d'une telle variation lorsque les données biométriques considérées sont des iris codés sur 2048 éléments binaires ou bits. Elle donne une répartition des distances de Hamming observées sur 1028 couples de mesures, les deux mesures de chaque couple étant relatives à un même iris. On rappelle que la distance de Hamming entre deux chaînes binaires de même longueur est le nombre de bits de même rang qui diffèrent entre les deux chaînes. Elle est exprimée en pourcentage sur la figure 1. Ainsi, une distance de Hamming de 0,1 indique que 10% des bits de même rang diffèrent entre deux mesures du même iris.

La figure 2 donne une représentation du même type que la figure 1 dans le cas où les deux mesures de chaque couple sont relatives à des iris distincts, c'est-à-dire à des iris d'individus différents. Cette répartition permet de constater que la distance de Hamming est généralement plus élevée dans le cas de la figure 2 que dans celui de la figure 1. Ceci signifie que la variabilité entre deux mesures d'un même iris est bien inférieure à la différence moyenne entre deux mesures d'iris différents.

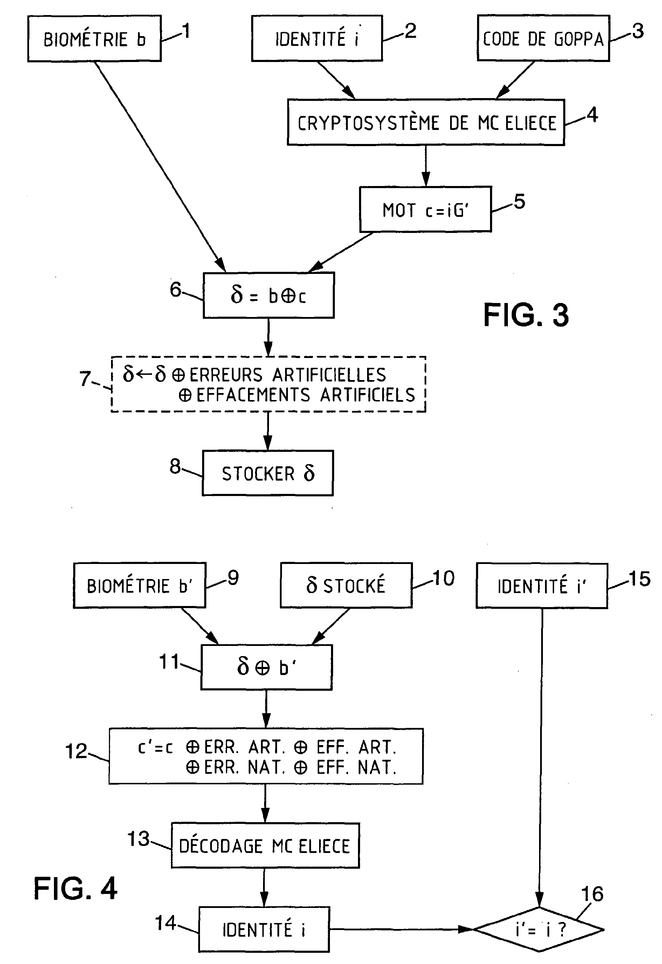

La figure 3 montre les étapes d'un enrôlement selon un mode de réalisation de l'invention. Cet enrôlement comprend un codage de données biométriques. Ainsi, lorsqu'un individu se présente pour un enrôlement, on détecte dans un premier temps des données biométriques de cet individu (étape 1). On obtient ainsi une biométrie b de l'individu en question, sous forme d'une chaîne binaire.

Par ailleurs, une information fait l'objet d'un codage. Dans l'exemple illustré sur la figure 3, cette information est une identité i de l'individu qui se présente pour un enrôlement (étape 2). Cette identité peut par exemple être obtenue après vérification d'une pièce d'identité de cet individu.

Un code, par exemple un code de Goppa, est alors choisi pour coder l'identité i (étape 3). Les codes de Goppa sont des codes correcteurs d'erreurs de l'état de la technique aptes à corriger une certaine quantité d'erreurs par exemple dans une transmission de données binaires. Le code de Goppa est notamment choisi pour corriger une quantité d'erreurs dans la gamme d'erreurs de la figure 1, par exemple autour de la moyenne des distances de Hamming observées sur la figure 1, mais pas une quantité d'erreurs dans la gamme d'erreurs de la figure 2, de façon à ne pas conclure à tort qu'il existe une identité entre les biométries de deux individus différents.

Par la suite, l'identité i est codée selon un algorithme tel que le cryptosystème de McEliece, en utilisant le code de Goppa choisi (étape 4). Le cryptosystème de McEliece est notamment décrit dans le document intitulé "A public-key cryptosystem based on algebraic coding theory" de R.J. McEliece, publié dans le numéro de Janvier-Février 1978 de la revue "DSN Progress Report 42-44". Il permet de dissimuler le code utilisé de façon à ce que la structure algébrique de ce dernier ne puisse pas être retrouvée par une personne non autorisée. Ainsi, le décodage de l'information codée ne peut être réalisé que par une personne habilitée.

A l'issue de l'étape 4, l'identité i est codée sous la forme d'un mot de code linéaire (étape 5). Le mot c ainsi obtenu est de la forme c=iG', où G' est une matrice formée à partir d'une autre matrice G de dimension k*n, avec k représentant la dimension du code de Goppa choisi tel k≥n-tm, n=$2^m$ est la longueur du code de Goppa choisi, m est un entier et t est le nombre maximum d'erreurs que le codage est en mesure de corriger. G' s'exprime de la façon suivante : G'=SGP, où S est une matrice régulière inversible de dimension k*k et P est une matrice de permutation aléatoire de dimension n*n. Le couple (S,P) est parfois appelé "trappe". Seule une personne disposant de la trappe est capable de décoder sans effort le mot c obtenu. Cela est d'autant plus vrai que le mot c est en réalité entaché d'erreurs, comme cela sera détaillé par la suite.

A l'étape 6, on calcule une quantité δ comme un OU exclusif de la biométrie b et du mot de code c obtenu à l'étape 5, soit δ=b⊕c. Cette quantité, qui peut être vue sensiblement comme un codage de la biométrie b par le mot de code c, est enfin mémorisée pour être stockée dans une base de données (étape 8). On notera que, contrairement au procédé de l'état de la technique décrit dans WO 00/51244, seule une quantité δ est stockée en relation avec chaque individu faisant l'objet d'un enrôlement, et non un couple de valeurs (h(c),δ), ce qui permet de limiter la quantité d'informations à stocker.

Dans façon optionnelle, la valeur de δ est modifiée avant d'être mémorisée. A cet effet, un certain nombre de bits de la chaîne binaire b⊕c sont effacés et d'autres sont modifiés. C'est ce qui est schématisé à l'étape 7 par l'expression : δ ← δ⊕ erreurs artificielles ⊕ effacements artificiels. L'amplitude et l'intérêt d'une telle opération seront explicités par la suite, en référence à la figure 4.

En variante, des erreurs artificielles et des effacements artificiels peuvent être optionnellement introduits directement dans le mot c aux étapes 4-5, ce qui revient également à les ajouter à la quantité δ issue de c, puisque δ=b⊕c.

La figure 4 un organigramme montrant les étapes d'un contrôle d'identité selon un mode de réalisation de l'invention. Par contrôle d'identité, il faut entendre la vérification de la présence de la biométrie d'un individu dans la base de données stockant les valeurs de δ mentionnées plus haut. Lorsque l'enrôlement de l'individu a été préalablement effectué à l'aide d'une identité de cet individu, comme dans l'exemple illustré sur la figure 3, le contrôle d'identité peut comprendre en outre une véritable vérification de l'identité, comme cela sera décrit plus loin.

Lorsqu'on souhaite vérifier si un individu a fait l'objet d'un enrôlement préalable, on procède donc de la façon suivante. On effectue tout d'abord une mesure biométrique de cet individu. On obtient ainsi une biométrie b' (étape 9). Si l'individu en question a déjà fait l'objet d'un enrôlement à partir d'une biométrie b, on peut alors considérer que b' est une chaîne binaire similaire à b à quelques éléments binaires près. Cela peut s'exprimer de cette façon : b'=b⊕ erreurs naturelles⊕ effacements naturels. La quantité d'erreurs et effacements naturels est par exemple de l'ordre des distances de Hamming représentées sur la figure 1, dans le cas où les biométries b et b' sont des codages numériques d'iris.

A l'étape 11, on effectue un OU exclusif entre la biométrie b' mesurée à l'étape 9 et chacun des δ stockés (étape 10) dans la base de données préalablement constituée. Cette opération permet d'obtenir une valeur c' proche du mot de code c de l'étape 5 à des effacements et des erreurs binaires près. Ainsi, c' peut s'écrire c'=c⊕ erreurs naturelles⊕ effacements naturels, qu'on écrit pour simplifier : c'=c⊕err. nat.⊕eff. nat. Ces effacements et erreurs naturels constituent une erreur aléatoire e entachant le mot c conformément au cryptosystème de McEliece.

Puisque le mot de code c dissimule une information comme expliqué plus haut, il convient d'effectuer un décodage à partir du résultat de l'étape 12, à l'aide du cryptosystème de McEliece (étape 13). Pour ce faire, on multiplie c' par l'inverse de la matrice P, soit c'.P$^{-1}$. Cette expression est assimilable à un mot du code de Goppa choisi. Comme cela est décrit dans le document "A public-key cryptosystem based on algebraic coding theory" précité, on est alors capable de retrouver la valeur iS. On en déduit alors l'information i (étape 14) en multipliant iS par l'inverse de la matrice S, soit i=iSS$^{-1}$. En d'autres termes, on retrouve l'information codée lors de l'enrôlement de l'individu considéré, grâce à la connaissance de la trappe, c'est-à-dire du couple de matrices (S,P).

Le fait d'obtenir, à l'étape 14, une information dissimulée dans le code c' constitue un indice selon lequel la biométrie b' pourrait correspondre à la biométrie b qui a été préalablement codée à l'aide du mot c, c'est-à-dire que l'individu considéré a fait l'objet d'un enrôlement préalable.

Dans l'exemple décrit en référence aux figures 3 et 4, l'information i est une identité de l'individu enrôlé. Une fois l'identité i retrouvée à l'étape 14, on peut alors avantageusement comparer cette identité i avec une identité i' déclinée par l'individu considéré. Si ces identités correspondent entre elles, cela confirme que l'individu en question est bien celui qui a fait l'objet d'un enrôlement préalable.

Bien sûr, des informations autres que l'identité de l'individu peuvent être utilisées comme indiqué plus haut, pour autant que l'individu dispose lui-même de ces informations, à des fins de vérification. A titre d'exemple, les mots du code de Goppa choisi peuvent être obtenus à partir d'un mot de passe connu de l'individu ayant fait l'objet d'un enrôlement. Après décodage de ce mot de code, il est possible de demander à l'individu son mot de passe pour le comparer à celui dissimulé dans le mot de code en question.

Grâce aux mécanismes décrits plus haut, on s'assure que seules les personnes disposant de la trappe, qui constitue une information secrète, peuvent vérifier qu'un individu a fait l'objet d'un enrôlement préalable. A l'inverse, une personne malfaisante ne disposant pas de la trappe sera incapable d'effectuer un tel contrôle.

On notera que ce résultat est obtenu du fait que des différences existent entre deux mesures biométriques b et b' relatives à un même individu, ces différences constituant une erreur aléatoire compliquant le décodage pour une personne ne disposant pas de la trappe. Toutefois, dans les rares cas où deux mesures biométriques b et b' relatives à un même individu seraient absolument identiques, c'est-à-dire où la distance de Hamming séparant ces deux mesures serait nulle, le décodage de l'information i serait plus aisée pour une personne malfaisante.

C'est pour éviter une telle situation que des erreurs et des effacements artificiels ont été introduits dans les valeurs de δ à l'étape optionnelle 7. Ces erreurs sont introduites dans le mot c' obtenu à l'étape 12. On s'assure ainsi que des erreurs aléatoires sont toujours présentes dans le mot de code obtenu, même dans le cas de mesures biométriques identiques, ce qui rend le décodage quasi impossible sans connaissance de la trappe de McEliece.

La quantité d'erreurs et d'effacements artificiels à introduire dans le système dépend du niveau de difficulté de décodage qu'on cherche à atteindre. En effet, plus cette quantité est élevée, plus le décodage est rendu complexe du fait du caractère aléatoire du codage. Toutefois, cette quantité ne doit pas conduire à dépasser la quantité d'erreurs que le code de Goppa choisi est capable de corriger. La probabilité de réussir à retrouver l'information i incluse dans un mot de code c, sans connaître la trappe, peut être approximée par $\dfrac{C_{n-k}^{\tau}}{C_n^{\tau}}$, où $\tau$ représente un nombre d'erreurs.

A titre d'exemple non limitatif, on se place dans le cas où, selon les notations introduites plus haut, m=13 et t=410. On sait donc corriger 5% (=410/2$^{13}$) d'erreurs sur la longueur de code. Si b' contient 1,5% (c'est-à-dire 123 en valeur absolue) d'erreurs naturelles par rapport à n, on peut donc introduire encore 3,5% d'erreurs artificielles, sans limiter les performances du décodage. En revanche, le taux d'erreurs artificielles + naturelles ne doit pas dépasser les 5% sous peine de toujours empêcher le système de conclure à la correspondance entre b et b'. On notera cependant que même si aucune erreur artificielle n'est introduite, le système présentant tout de même 1,5% d'erreurs naturelles, il est quand très difficile de retrouver l'information codée sans connaître la trappe.

Le procédé de codage des données biométriques décrit plus haut, en référence à la figure 3, peut être mis en oeuvre dans un dispositif de codage. De même, le procédé décrit en référence à la figure 4 et permettant de vérifier qu'un individu a fait l'objet d'un enrôlement préalable peut être mis en oeuvre dans un dispositif de contrôle. Ces dispositifs peuvent éventuellement faire partie d'un même système.

**Revendications**

1. Procédé de codage de données biométriques associées à des individus respectifs, comprenant les étapes suivantes :

   - obtenir des données biométriques (b) associées à un individu sous forme d'une chaîne binaire ;
   - générer un mot (c) issu d'un code correcteur d'erreurs choisi pour corriger une quantité d'erreurs en relation avec une quantité d'erreurs statistique entre deux mesures biométriques relatives à un même individu, le mot dissimulant une information relative audit individu, à l'aide d'une fonction privée utilisant une information secrète et dont la connaissance permet de retrouver l'information dissimulée dans le mot ; et

- effectuer une combinaison ($\delta$) entre les données biométriques obtenues et le mot généré.

2. Procédé selon la revendication 1, dans lequel ladite combinaison est un OU exclusif entre les données biométriques (b) obtenues et le mot (c) généré.

3. Procédé selon la revendication 1 ou 2, dans lequel l'information dissimulée dans le mot (c) généré est une identité (i) dudit individu.

4. Procédé selon l'une quelconque des revendications précédentes, dans lequel la génération du mot (c) dissimulant une information relative audit individu à l'aide d'une fonction privée utilisant une information secrète et dont la connaissance permet de retrouver l'information dissimulée dans le mot, est conforme au cryptosystème de McEliece.

5. Procédé selon l'une quelconque des revendications précédentes, dans lequel on modifie ou on efface une quantité prédéterminée d'éléments binaires du mot (c) généré ou du résultat de la combinaison ($\delta$) entre les données biométriques (b) obtenues et le mot (c) généré.

6. Procédé selon la revendication 5, dans lequel la quantité prédéterminée d'éléments binaires du mot (c) généré ou du résultat de ladite combinaison ($\delta$) qu'on modifie ou qu'on efface est fixée en fonction d'un niveau de difficulté visé pour retrouver l'information dissimulée dans ledit mot, sans connaître ladite fonction privée, et de la quantité d'erreurs statistique entre deux mesures biométriques relatives à un même individu.

7. Procédé selon la revendication 5 ou 6, dans lequel la somme de ladite quantité prédéterminée d'éléments binaires du mot (c) généré ou du résultat de la combinaison ($\delta$) qu'on modifie ou qu'on efface et de ladite quantité d'erreurs statistique entre deux mesures biométriques relatives à un même individu est inférieure ou égale à la quantité d'erreurs que le code correcteur d'erreurs choisi peut corriger.

8. Procédé selon l'une quelconque des revendications précédentes, dans lequel on mémorise le résultat de la combinaison ($\delta$) entre les données biométriques (b) obtenues et le mot (c) généré.

9. Procédé de contrôle d'identité à partir de données biométriques (b) préalablement mémorisées, les données biométriques étant associées à des individus respectifs et étant codées chacune avec un mot (c) respectif issu d'un code correcteur d'erreurs, chaque mot dissimulant une information relative à l'individu associé aux données biométriques correspondantes, à l'aide d'une fonction privée utilisant une information secrète et dont la connaissance permet de retrouver l'information dissimulée dans le mot, le code correcteur d'erreurs étant choisi pour corriger une quantité d'erreurs en relation avec une quantité d'erreurs statistique entre deux mesures biométriques relatives à une même individu, le procédé comprenant les étapes suivantes :

- effectuer une mesure biométrique (b') relative à un individu ;
- effectuer, pour certaines au moins des données biométriques codées mémorisées ($\delta$), une combinaison entre ladite mesure biométrique et lesdites donnée biométrique codée mémorisée ($\delta$) ; et
- décoder le résultat de ladite combinaison à partir de ladite fonction privée, pour retrouver l'information dissimulée dans le mot (c) avec lequel les données biométriques associées audit individu ont été préalablement codées.

10. Procédé selon la revendication 9, dans lequel ladite combinaison est un OU exclusif entre ladite mesure biométrique (b') et certaines au moins des données biométriques codées mémorisées ($\delta$).

11. Procédé selon la revendication 9 ou 10, dans lequel l'information dissimulée dans un mot du code correcteur d'erreurs, avec lequel les données biométriques associées à un individu sont codées, est une identité (i) dudit individu.

12. Procédé selon la revendication 11, comprenant en outre une étape dans laquelle on vérifie que l'identité (i) retrouvée après décodage du résultat de la combinaison entre la mesure biométrique (b') relative audit individu et certaines au moins des données biométriques codées mémorisées ($\delta$) correspond à une identité (i') déclinée par ledit individu.

13. Procédé selon l'une quelconque des revendications 9 à 12, dans lequel le codage des données biométriques avec un mot respectif d'un code correcteur d'erreurs, chaque mot dissimulant une information relative à l'individu associé aux données biométriques correspondantes, à l'aide d'une fonction privée utilisant une information secrète et dont la connaissance permet de retrouver l'information dissimulée dans le mot, est conforme au cryptosystème de McEliece.

**14.** Procédé selon l'une quelconque des revendications 9 à 13, dans lequel chaque mot avec lequel des données biométriques respectives sont codées comporte une quantité prédéterminée d'éléments binaires modifiés ou effacés.

**15.** Procédé selon la revendication 14, dans lequel la quantité prédéterminée d'éléments binaires modifiés ou effacés pour chaque mot est fixée en fonction d'un niveau de difficulté visé pour retrouver l'information dissimulée dans ledit mot, sans connaître ladite fonction privée, et de ladite quantité d'erreurs statistique entre deux mesures biométriques relatives à un même individu.

**16.** Procédé selon la revendication 14 ou 15, dans lequel la somme de ladite quantité prédéterminée d'éléments binaires modifiés ou effacés pour chaque mot et de ladite quantité d'erreurs statistique entre deux mesures biométriques relatives à un même individu est inférieure ou égale à la quantité d'erreurs que le code correcteur d'erreurs choisi peut corriger.

**17.** Dispositif de codage comprenant des moyens pour mettre en oeuvre le procédé de codage selon l'une quelconque des revendications 1 à 8.

**18.** Dispositif de contrôle comprenant des moyens pour mettre en oeuvre le procédé de contrôle d'identité selon l'une quelconque des revendications 9 à 16.

**Patentansprüche**

**1.** Verfahren zur Kodierung biometrischer Daten, die jeweiligen Individuen zugeordnet sind, umfassend die folgenden Schritte:

- das Erhalten von einem Individuum zugeordneten biometrischen Daten (b) in Form einer Binärkette;
- das Erzeugen eines Wortes (c) aus einem ausgewählten Fehlerkorrekturcode zum Korrigieren einer Fehlermenge im Zusammenhang mit einer statistischen Fehlermenge zwischen zwei biometrischen Messungen bezüglich ein und desselben Individuums zu korrigieren, wobei das Wort eine Information bezüglich des Individuums mittels einer Privatfunktion unter Nutzung einer geheimen Information verbirgt, deren Kenntnis es erlaubt, die im Wort verborgene Information wiederzufinden; und
- das Ausführen einer Kombination ($\delta$) zwischen den erhaltenen biometrischen Daten und dem erzeugten Wort.

**2.** Verfahren nach Anspruch 1, wobei die Kombination ein exklusives ODER zwischen den erhaltenen biometrischen Daten (b) und dem erzeugten Wort (c) ist.

**3.** Verfahren nach Anspruch 1 oder 2, wobei die im erzeugten Wort (c) verborgene Information eine Identität (i) des Individuums ist.

**4.** Verfahren nach einem der vorangehenden Ansprüche, wobei die Erzeugung des Wortes (c), das eine Information bezüglich des Individuums mittels einer Privatfunktion unter Nutzung einer geheimen Information verbirgt, deren Kenntnis es erlaubt, die im Wort verborgene Information wiederzufinden, nach dem Kryptosystem von McEliece erfolgt.

**5.** Verfahren nach einem der vorangehenden Ansprüche, wobei eine vorbestimmte Menge binärer Elemente des erzeugten Wortes (c) oder des Ergebnisses der Kombination ($\delta$) zwischen den erhaltenen biometrischen Daten (b) und dem erzeugten Wort (c) verändert oder gelöscht wird.

**6.** Verfahren nach Anspruch 5, wobei die vorbestimmte Menge an veränderten oder gelöschten binären Elementen des erzeugen Wortes (c) bzw. des Ergebnisses der Kombination ($\delta$) in Abhängigkeit von einem Schwierigkeitsniveau, das zum Wiederfinden der im Wort verborgenen Information ohne die Kenntnis der Privatfunktion vorgesehen ist, und von der statistischen Fehlermenge zwischen zwei biometrischen Messungen bezüglich ein und desselben Individuums festgelegt wird.

**7.** Verfahren nach Anspruch 5 oder 6, wobei die Summe der vorbestimmten Menge an veränderten oder gelöschten binären Elementen des erzeugten Wortes (c) bzw. des Ergebnisses der Kombination ($\delta$) und der statistischen Fehlermenge zwischen zwei biometrischen Messungen bezüglich ein und desselben Individuums kleiner als oder so groß wie die Fehlermenge ist, die der ausgewählte Fehlerkorrekturcode korrigieren kann.

**8.** Verfahren nach einem der vorangehenden Ansprüche, wobei das Ergebnis der Kombination ($\delta$) zwischen den erhaltenen biometrischen Daten (b) und dem erzeugten Wort (c) gespeichert wird.

**9.** Verfahren zur Identitätskontrolle anhand von zuvor gespeicherten biometrischen Daten (b), wobei die biometrischen Daten jeweiligen Individuen zugeordnet und jeweils durch ein jeweiliges Wort (c) aus einem Fehlerkorrekturcode kodiert sind, wobei jedes Wort eine Information bezüglich des den entsprechenden biometrischen Daten zugeordneten Individuums mittels einer Privatfunktion unter Nutzung einer geheimen Information verbirgt, deren Kenntnis es erlaubt, die im Wort verborgene Information wiederzufinden, wobei der Fehlerkorrekturcode ausgewählt ist, um eine Fehlermenge im Zusammenhang mit einer statistischen Fehlermenge zwischen zwei biometrischen Messungen bezüglich ein und desselben Individuums zu korrigieren, wobei das Verfahren die folgenden Schritte umfasst:

- das Ausführen einer biometrischen Messung (b') bezüglich eines Individuums;
- für zumindest einige der gespeicherten kodierten biometrischen Daten ($\delta$) das Ausführen einer Kombination zwischen der biometrischen Messung und den gespeicherten kodierten biometrischen Daten ($\delta$); und
- das Dekodieren des Ergebnisses der Kombination anhand der Privatfunktion, um die Information, die im Wort (c), mit dem die dem Individuum zugeordneten biometrischen Daten zuvor kodiert wurden, verborgen ist, wiederzufinden.

10. Verfahren nach Anspruch 9, wobei die Kombination ein exklusives ODER zwischen der biometrischen Messung (b') und zumindest einigen der kodierten gespeicherten biometrischen Daten ($\delta$) ist.

11. Verfahren nach Anspruch 9 oder 10, wobei die Information, die in einem Wort des Fehlerkorrekturcodes, mit dem die einem Individuum zugeordneten biometrischen Daten kodiert sind, verborgen ist, eine Identität (i) des Individuums ist.

12. Verfahren nach Anspruch 11, umfassend ferner einen Schritt, in welchem überprüft wird, ob die Identität (i), die nach der Dekodierung des Ergebnisses der Kombination zwischen der biometrischen Messung (b') bezüglich des Individuums und zumindest einiger der gespeicherten kodierten biometrischen Daten ($\delta$) wiedergefunden wurde, einer vom Individuum angegebenen Identität (i') entspricht.

13. Verfahren nach einem der Ansprüche 9 bis 12, wobei die Kodierung der biometrischen Daten mit einem jeweiligen Wort eines Fehlerkorrekturcodes, bei der jedes Wort eine Information bezüglich eines den entsprechenden biometrischen Daten zugeordneten Individuums mittels einer Privatfunktion unter Nutzung einer geheimen Information verbirgt, deren Kenntnis es erlaubt, die im Wort verborgene Information wiederzufinden, nach dem Kryptosystem von McEliece erfolgt.

14. Verfahren nach einem der Ansprüche 9 bis 13, wobei jedes Wort, mit dem jeweilige biometrische Daten kodiert werden, eine vorbestimmte Menge veränderter oder gelöschter binärer Elemente aufweist.

15. Verfahren nach Anspruch 14, wobei die vorbestimmte Menge an pro Wort veränderten oder gelöschten binären Elementen in Abhängigkeit von einem Schwierigkeitsniveau, das zum Wiederfinden der im Wort verborgenen Information ohne die Kenntnis der Privatfunktion vorgesehen ist, und von der statistischen Fehlermenge zwischen zwei biometrischen Messungen bezüglich ein und desselben Individuums festgelegt wird.

16. Verfahren nach Anspruch 14 oder 15, wobei die Summe der vorbestimmten Menge an pro Wort veränderten oder gelöschten binären Elementen und der statistischen Fehlermenge zwischen zwei biometrischen Messungen bezüglich ein und desselben Individuums kleiner als oder so groß wie die Fehlermenge ist, die der ausgewählte Fehlerkorrekturcode korrigieren kann.

17. Vorrichtung zur Kodierung, umfassend Mittel zum Ausführen des Verfahrens zur Kodierung nach einem der Ansprüche 1 bis 8.

18. Vorrichtung zur Kontrolle, umfassend Mittel zum Ausführen des Verfahrens zur Identitätskontrolle nach einem der Ansprüche 9 bis 16.

**Claims**

1. Method for coding biometric data associated with respective individuals, comprising the following steps:

- obtaining biometric data (b) associated with an individual in the form of a bit string;
- generating a word (c) derived from an error correcting code chosen so as to correct a quantity of errors in relation with a statistical quantity of errors between two biometric measurements relating to one and the same individual, the word concealing an item of information relating to said individual with the aid of a private function using a secret information item, knowledge of which can be used to retrieve the information concealed in the word; and
- performing a combination ($\delta$) between the biometric data obtained and the word generated.

2. Method according to claim 1, wherein said combination is an exclusive OR between the biometric data (b) obtained and the word (c) generated.

3. Method according to claim 1 or 2, wherein the information concealed in the word (c) generated is an identity (i) of said individual.

4. Method according to any one of the previous claims, wherein the generation of the word (c) concealing an item of information relating to said individual with the aid of a private function using a secret information item, knowledge of which can be used to retrieve the information concealed in the word, is in accordance with the McEliece cryptosystem.

5. Method according to any one of the previous claims, wherein a predetermined quantity of binary elements of the word (c) generated or of the result of the combination (δ) between the biometric data (b) obtained and the word (c) generated is modified or erased.

6. Method according to claim 5, wherein the predetermined quantity of binary elements of the word (c) generated or of the result of said combination (δ) that is modified or erased is fixed as a function of a pre-set level of difficulty of retrieving the information concealed in said word, without knowing said private function, and of the statistical quantity of errors between two biometric measurements relating to one and the same individual.

7. Method according to claim 5 or 6, wherein the sum of said predetermined quantity of binary elements of the word (c) generated or of the result of the combination (δ) that is modified or erased and of said statistical quantity of errors between two biometric measurements relating to one and the same individual is less than or equal to the quantity of errors that the error correcting code chosen can correct.

8. Method according to any one of the previous claims, wherein the result of the combination (δ) between the biometric data (b) obtained and the word (c) generated is stored.

9. Method for checking identity on the basis of previously stored biometric data (b), the biometric data being associated with respective individuals and each being encoded with a respective word (c) derived from an error correcting code, each word concealing an item of information relating to the individual associated with the corresponding biometric data with the aid of a private function using a secret information item, knowledge of which can be used to retrieve the information concealed in the word, whereby the error correcting code is chosen so as to correct a quantity of errors in relation with a statistical quantity of errors between two biometric measurements relating to one and the same individual, the method comprising the following steps:

- performing a biometric measurement (b') relating to an individual;
- performing, for at least some of the encoded biometric data stored (δ), a combination between said biometric measurement and said encoded biometric data stored (δ); and
- decoding the result of said combination on the basis of said private function, so as to retrieve the information concealed in the word (c) with which the biometric data associated with said individual has been previously encoded.

10. Method according to claim 9, wherein said combination is an exclusive OR between said biometric measurement (b') and at least some of the encoded biometric data stored (δ).

11. Method according to claim 9 or 10, wherein the information concealed in a word of the error correcting code, with which the biometric data associated with an individual are encoded, is an identity (i) of said individual.

12. Method according to claim 11, further comprising a step wherein a check is carried out to verify that the identity (i) retrieved after decoding the result of the combination between the biometric measurement (b') relating to said individual and at least some of the encoded biometric data stored (δ) corresponds to an identity (i') provided by said individual.

13. Method according to any one of claims 9 to 12, wherein the encoding of the biometric data with a respective word of an error correcting code, each word concealing an item of information relating to the individual associated with the corresponding biometric data with the aid of a private function using a secret information item, knowledge of which can be used to retrieve the information concealed in the word, is in accordance with the McEliece cryptosystem.

14. Method according to any one of claims 9 to 13, wherein each word with which respective biometric data is encoded comprises a predetermined quantity of modified or erased binary elements.

15. Method according to claim 14, wherein the predetermined quantity of modified or erased binary elements for each word is fixed as a function of a pre-set level of difficulty of retrieving the information concealed in said word, without knowing said private function, and of said statistical quantity of errors between two biometric measurements relating to one and the same individual.

16. Method according to claim 14 or 15, wherein the sum of said predetermined quantity of modified or erased binary elements for each word and of said statistical quantity of errors between two biometric measurements relating to one and the same individual is less than or equal to the quantity of errors that the error correcting code chosen can correct.

17. Encoding device comprising means for implementing the encoding method according to any one of claims 1 to 8.

**18.** Checking device comprising means for implementing the identity checking method according to any one of claims 9 to 16.

FIG. 1

FIG. 2

BIOMÉTRIE b ⌐1

IDENTITÉ i ⌐2

CODE DE GOPPA ⌐3

CRYPTOSYSTÈME DE MC ELIECE ⌐4

MOT c = iG' ⌐5

6⌐ $\delta = b \oplus c$

**FIG. 3**

7⌐ $\delta \leftarrow \delta \oplus$ ERREURS ARTIFICIELLES $\oplus$ EFFACEMENTS ARTIFICIELS

8⌐ STOCKER $\delta$

BIOMÉTRIE b' ⌐9

$\delta$ STOCKÉ ⌐10

IDENTITÉ i' ⌐15

11⌐ $\delta \oplus b'$

12⌐ $c' = c \oplus$ ERR. ART. $\oplus$ EFF. ART. $\oplus$ ERR. NAT. $\oplus$ EFF. NAT.

13⌐ DÉCODAGE MC ELIECE

**FIG. 4**

14⌐ IDENTITÉ i

16⌐ i' = i ?

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 0051244 A

**Littérature non-brevet citée dans la description**

• **R.J. MCELIECE.** A public-key cryptosystem based on algebraic coding theory. *DSN Progress Report 42-44,* Janvier 1978